(19) Europäisches Patentamt
European Patent Office
Office européen des brevets

(11) Veröffentlichungsnummer : **0 152 047**
**B1**

(12) # EUROPÄISCHE PATENTSCHRIFT

(45) Veröffentlichungstag der Patentschrift : **07.09.88**

(21) Anmeldenummer : **85101145.2**

(22) Anmeldetag : **04.02.85**

(51) Int. Cl.[4] : **G 03 G 5/09**, G 03 G 5/06, C 09 B 23/08, G 03 G 5/10, G 03 G 5/05

(54) **Elektrophotographisches Aufzeichnungsmaterial.**

(30) Priorität : **08.02.84 DE 3404365**

(43) Veröffentlichungstag der Anmeldung : **21.08.85 Patentblatt 85/34**

(45) Bekanntmachung des Hinweises auf die Patenterteilung : **07.09.88 Patentblatt 88/36**

(84) Benannte Vertragsstaaten : **DE GB NL**

(56) Entgegenhaltungen :
**DE-A- 2 353 639**
**DE-A- 3 141 554**
**DE-B- 2 526 720**
**DE-C- 704 141**
**US-A- 3 066 023**
**US-A- 3 148 982**
**US-A- 3 180 729**
**US-A- 3 189 447**
**US-A- 3 958 991**

(73) Patentinhaber : **HOECHST AKTIENGESELLSCHAFT**
**Postfach 80 03 20**
**D-6230 Frankfurt am Main 80 (DE)**

(72) Erfinder : **Franke, Werner, Dr. Dipl.-Chem.**
**Wendelsteinstrasse 58**
**D-6200 Wiesbaden (DE)**
Erfinder : **Brahm, Richard**
**Im Blumengarten 33**
**D-6507 Ingelheim (DE)**

**EP 0 152 047 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein elektrophotographisches Aufzeichnungsmaterial, bestehend aus einem elektrisch leitenden Schichtträger und einer photoleitfähigen Schicht, enthaltend organischen Photoleiter, Cyaninfarbstoff als Sensibilisierungsfarbstoff, Bindemittel und übliche Zusätze.

Es ist bekannt, für die elektrophotographische Reproduktion Photoleiter zu verwenden, die bis in den kurzwelligen sichtbaren Teil des Spektrums strahlungsempfindlich sind und deren Strahlungsempfindlichkeit im sichtbaren Teil des Spektrums dadurch erweitert werden kann, daß man einen oder mehrere Sensibilisierungsfarbstoffe zusetzt, die zur Übertragung der Energie längerwelligen Lichtes auf den Photoleiter befähigt sind. Hierzu gehören Farbstoffe der verschiedensten Verbindungsklassen.

Es ist bekannt (DE-AS 25 26 720, entsprechend US-PS 4,063,948), für die elektrophotographische Reproduktion ein elektrophotographisches Aufzeichnungsmaterial zu verwenden, das in der photoleitfähigen Schicht einen im blauen Spektralbereich sensibilisierenden Cyaninfarbstoff enthält. Eine derartige Sensibilisierung ermöglicht es jedoch nicht, die Energie von Lichtquellen auszunutzen, die, wie zum Beispiel Glühlampen, einen hohen Rotanteil besitzen.

Es ist auch bekannt (DE-OS 14 47 907, entsprechend US-PS 3,458,310), Photoleiterschichten bis ins sichtbare Rot zu sensibilisieren. Man verwendet hierzu zum Beispiel Farbstoffmischungen von Acridingelb, Acridinorange, Rhodamin und Brillantgrün, die in einer oder auch getrennt in verschiedenen Schichten zugesetzt werden (DE-OS 23 53 639, entsprechend US-PS 3,992,205), wobei sich die Wirkung der Einzelfarbstoffe addiert oder auch eine davon abweichende Sensibilisierung auftritt (DE-OS 28 17 428, entsprechend US-PS 4,252,880).

Derartige panchromatische Sensibilisierungen bringen insofern Vorteile, als die in der Reproduktionstechnik verwendeten Lichtquellen mit einem hohen Rotanteil besser ausgenutzt werden. Dies bedeutet für die Praxis kürzere Belichtungszeiten und damit Zeit- und Energieersparnis. Auch ist es möglich, wegen der verbesserten Empfindlichkeiten, den Photoleiteranteil in der photoleitfähigen Schicht herabzusetzen.

Von Nachteil ist jedoch bei einer derart durchgehenden Sensibilisierung, daß das Material nicht bei physiologisch günstigem, hellem Dunkelkammerlicht verarbeitet werden kann.

Viele der im roten Spektralbereich kräftig sensibilisierenden Farbstoffe, vorzugsweise diejenigen aus der Reihe der Triphenylmethanfarbstoffe, bewirken eine sehr breite Sensibilisierung, deren Maximum im allgemeinen aber nicht über etwa 650 nm liegt. Deshalb können längerwellig emittierende Lichtquellen nicht voll ausgenutzt werden, und es ist ohne Schaden auch keine Verarbeitung des Materials bei hellem Dunkelkammerlicht möglich.

Es ist bekannt (US-PS 4,386,146), Photoleiterschichten für photoempfindliche Papiere mit Titandioxid als Photoleiter mit den verschiedensten Cyaninfarbstoffen zu sensibilisieren. Diese sind für die Anwendung in der Colorelektrophotographie gedacht. Aus der Tatsache, daß die Cyaninfarbstoffe Titandioxid sensibilisieren, kann man jedoch keine Anhaltspunkte gewinnen, daß sie auch für Photoleiter mit zu Titandioxid unterschiedlichem elektrophotographischem Verhalten geeignet sind. Die bekannten Cyaninfarbstoffe haben eine Sensibilisierungswirkung über einen breiten Wellenlängenbereich. Dies ist jedoch dann von Nachteil, wenn die Verarbeitung und die Kontrolle des Materals bei sichtbarem Licht in der Dunkelkammer erfolgen soll.

Aus US-A- 3,958,991 sind schließlich Supersensibilisierungsfarbstoff-Kombinationen für Mischungen mit organischem Photoleiter bekannt, die Cyaninfarbstoffe enthalten. Aus einer solchen Kombination kann man jedoch nicht auf die Wirkung eines Einzelfarbstoffes allein schließen. Man muß vielmehr annehmen, daß derartige in Kombination verwendete Farbstoffe nur deshalb kombiniert verwendet werden, weil sie einzeln keine oder nur geringe Wirkung zeigen. Die Supersensibilisierung dient zur Steigerung der Photoempfindlichkeit der Mischungen, woraus man keineswegs auf das Verhalten in einem speziellen Spektralbereich schließen kann.

Der vorliegenden Erfindung lag die Aufgabe zugrunde, elektrophotographisches Aufzeichnungsmaterial mit organischem Photoleiter derart zu sensibilisieren, daß es ein Sensibilisierungsmaximum bei über etwa 670 nm besitzt und dessen kurzwellige Kante es gestattet, das Aufzeichnungsmaterial auch bei hellem Dunkelkammerlicht, zum Beispiel gelbem oder grünem Licht, ohne Schädigung zu verarbeiten. Der hierfür geeignete Sensibilisierungsfarbstoff sollte möglichst auch mit anderen Sensibilisatoren verträglich sein und zum Beispiel ohne empfindlichkeitsmindernde Wechselwirkung mit kürzerwellig sensibilisierenden Farbstoffen mischbar sein, um dadurch den gesamten roten, nicht jedoch etwa den grünen Spektralbereich, sensibilisieren zu können.

Die Lösung der Aufgabe geht aus von einem elektrophotographischen Aufzeichnungsmaterial, bestehend aus einem elektrisch leitenden Schichtträger und einer photoleitfähigen Schicht, enthaltend organischen Photoleiter, Cyaninfarbstoff als Sensibilisierungsfarbstoff, Bindemittel und übliche Zusätze, und sie ist dadurch gekennzeichnet, daß das Aufzeichnungsmaterial als Sensibilisator mindestens ein Bis-benzthiazol-pentamethincyanin der allgemeinen Formel enthält,

(Siehe Formel Seite 3 f.)

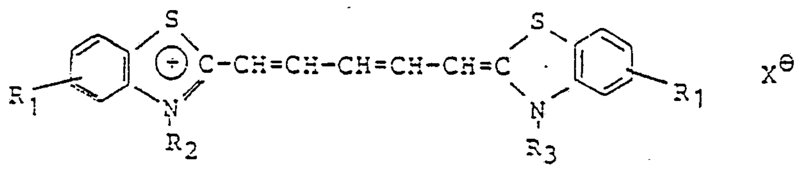

in der

$R_1$ Halogen,

$R_2$ Alkyl mit 1 bis 3 Kohlenstoffatomen, $-(CH_2)_m-SO_3^-$ oder $-(CH_2)n-COO^-$,

$R_3$ Alkyl mit 1 bis 3 Kohlenstoffatomen, $(-CH_2)_mSO_3H$, $-(CH_2)_nCOOH$ oder deren Alkalisalz (Me),

X p-Toluolsulfonat, Bromid, Jodid, Perchlorat oder Null, wenn $R_2$ die angegebene Betainstruktur besitzt,

m 2 oder 3 und

n 1 oder 2

bedeuten, mit einem Sensibilisierungsmaximum im Bereich zwischen etwa 680 und 710 nm. Das Halogen für $R_1$ bedeutet insbesondere Chlor oder Brom.

In bevorzugter Ausführungsform stellt das erfindungsgemäße Bis-benzthiazol-pentamethin-cyanin eine Verbindung der Formel

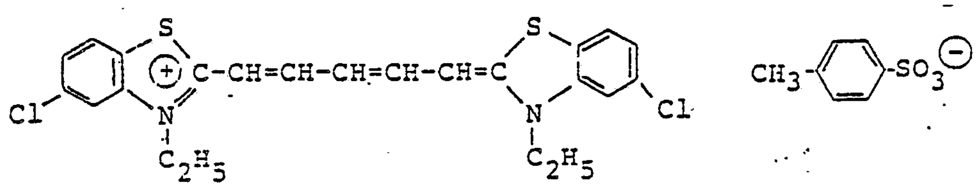

dar. Weitere einsetzbare Farbstoffe sind der beigefügten Formeltabelle zu entnehmen.

Hierdurch wird erreicht, daß ein gegen grünes und/oder gelbes Licht dunkelkammersicheres Aufzeichnungsmaterial zur Verfügung gestellt werden kann, das eine selektive Sensibilisierung im Grenzgebiet des sichtbaren Rot zum Infrarot-Bereich mit einem Sensibilisierungsmaximum im Bereich zwischen 680 und 710 nm besitzt und nach der kurzwelligen Seite des Spektrums derart abfällt, daß das Aufzeichnungsmaterial im grünen und grüngelben Bereich nicht mehr empfindlich ist.

Durch Verwendung des im langwellig roten Spektralbereich sensibilisierenden erfindungsgemäßen Bis-benzthiazol-pentamethin-cyanins kann man auch erreichen, daß in Abmischung mit Farbstoffen, die nur im kurzwellig roten Spektralbereich sensibilisieren, das gesamte rote Gebiet vergleichsweise gleichmäßig und ohne ein ausgeprägtes Maximum sensibilisiert werden kann, unter Beibehaltung einer Lücke im grünen Gebiet des Spektrums, die es gestatttet, bei guter Ausnutzung des Rotanteils der Belichtungsquelle bis zum Infrarotbereich das Aufzeichnungsmaterial bei heller, etwa grüner, Dunkelkammerbeleuchtung zu verarbeiten und visuelle Kontrollen durchzuführen. Das erfindungsgemäße Aufzeichnungsmaterial enthält daher in einer besonderen Ausführungsform in der photoleitfähigen Schicht zusätzlich einen Sensibilisierungsfarbstoff, der ein Sensibilisierungsmaximum unterhalb 670 nm mit einem steilen Abfall der Empfindlichkeit an der kurzwelligen Kante besitzt.

Eine Sensibilisierung dieser Art kann durch eine Abmischung mit einem Farbstoff, wie Saüregrün (Acid Green, C.I. 42 095) erfolgen.

Aus der Photographie ist bekannt, daß viele Cyaninfarbstoffe Silberhalogenid spektral sensibilisieren. Dagegen ist die Sensibilisierung elektrophotographischer Aufzeichnungsmaterialien mit derartigen Farbstoffen unterschiedlich. Oft ist sie nur gering oder es tritt keine Sensibilisierung ein oder es lassen sich mit dem gleichen Farbstoff nur organische Photoleiter, nicht aber anorganische Photoleiter sensibilisieren. Eine Voraussage, ob Farbstoffe, die für die Silberhalogenidphotographie als Sensibilisatoren geeignet sind, auch geeignete Sensibilisatoren für Photoleiter, insbesondere organische Photoleiter, darstellen, ist im allgemeinen nicht möglich. Außerdem sind weit weniger gut sensibilisierende Farbstoffe für den langwellig roten Bereich bekannt als für den kurzwelligen Bereich des Spektrums. Es war daher überraschend, daß der erfindungsgemäße Sensibilisierungsfarbstoff die photoleitfähigen Schichten mit organischen Photoleitern gut und in selektiver Weise im langwelligen sichtbaren roten Spektralbereich sensibilisiert.

Bei Cyaninfarbstoffen ist das Sensibilisierungsmaximum der Photoleiterschicht im allgemeinen nur geringfügig gegenüber dem Absorptionsmaximum des Farbstoffes in Alkohol verschoben, und es liegt meist deutlich kürzerwellig als das Maximum von photographischen Schichten, die mit dem gleichen Farbstoff sensibilisiert wurden.

Das erfindungsgemäße Bis-benzthiazol-pentamethin-cyanin sensibilisiert jedoch Photoleiter und Silberhalogenid etwa im gleichen Gebiet, wobei das Sensibilisierungsmaximum etwa 30 nm längerwellig als das Absorptionsmaximum in Alkohol liegt.

Ferner ist die verbleibende Restfärbung der photoleitfähigen Schicht nur gering, sie läßt sich, falls erforderlich, durch Nachbelichten leichter ausbleichen als bei echten Farbstoffen, die man zur Sensibilisierung in diesem Bereich verwendet.

Die erfindungsgemäß verwendeten Sensibilisierungsfarbstoffe gewährleisten eine große Dunkelkammersicherheit gegenüber gelbem und grünem Dunkelkammerlicht und eine gute Ausnutzung der Lichtemission von Lichtquellen, die hauptsächlich oder selektiv im Hochrot oder bis ins Hochrote emittieren, wie zum Beispiel III/V-Dioden (LED-Dioden, Halbleiterlaser), Gaslaser, Farbstofflaser, Glüh- oder Xenonlampen.

Durch die Lücke im grünen bis gelbgrünen Bereich erzielt man zusätzlich mehr Sicherheit und eine bessere Qualität der hergestellten Produkte durch visuelle Kontrolle der Arbeitsvorgänge, und man schafft angenehmere Arbeitsbedingungen.

Durch die Sensibilisierungslücke ergibt sich auch die Möglichkeit, beispielsweise bei gedruckten Schaltungen, als Vorlage die Montage einer gedruckten Schaltung auf einem Standbogen zu verwenden, der mit roten Markierungen versehen ist. Diese Markierungen werden nicht wiedergegeben. Gleichzeitig kann man aber bei grüngelbem Dunkelkammerlicht arbeiten.

Die Herstellung der erfindungsgemäßen Sensibilisierungsfarbstoffe erfolgt nach den in der Chemie der Sensibilisierungsfarbstoffe für Silberhalogenid-Emulsionen üblichen und dem Fachmann bekannten Verfahrensweisen.

Die Konzentration des erfindungsgemäßen Sensibilisierungsfarbstoffes hängt von dem im Einzelfall verwendeten Photoleiter, dem erwünschten Effekt und auch von den verwendeten Sensibilisierungsfarbstoffen selbst ab. Üblicherweise werden etwa 0,01 bis etwa 5 Gewichtsprozent, bezogen auf das Gewicht des Photoleiters, zugesetzt.

Als organische Photoleiter kommen monomere wie polymere aromatische carbocyclische oder heterocyclische Verbindungen in Frage.

Vorzugsweise werden Oxdiazolderivate, wie 2,5-Bis-(4'-diethylaminophenyl)-1,3,4-oxdiazol, beschrieben in DE-PS 10 58 836 (entsprechend US-PS 3,189,447), oder Oxazolderivate, wie 2-Vinyl-4-(2'-chlorphenyl)-5-(4''-diethylaminophenyl)-oxazol oder 2-Phenyl-4-(2'-chlorphenyl)-5-(4''-diethylaminophenyl)-oxazol, beschrieben in DE-PS 10 60 260 (entsprechend US-PS 3,112,197) bzw. 11 20 875 (entsprechend US-PS 3,257,203), eingesetzt. Es sind auch Pyrazolinderivate gut einsetzbar, wie sie aus der deutschen Auslegeschrift 10 60 714, entsprechend US-PS 3,180,729, bekannt sind, oder Hydrazonverbindungen, beispielsweise bekannt aus DE-OS 29 19 791, entsprechend US-PS 4,278,747.

Als polymere Verbindungen sind beispielsweise vinylaromatische Polymere, wie Polyvinylanthracen, Polyacenaphthylen oder Mischpolymerisate geeignet. Ganz besonders bewährt haben sich Poly-N-vinylcarbazol oder Mischpolymerisate des N-Vinylcarbazols mit einem N-Vinylcarbazol-Gehalt von mindestens etwa 40 Gewichtsprozent.

Als Bindemittel sind hinsichtlich der Flexibilität, der Filmbildungseigenschaften und der Haftfestigkeit bekannte Natur- bzw. Kunstharze geeignet. Bei ihrer Auswahl spielen außer den filmbildenden und elektrischen Eigenschaften sowie wegen der Haftfestigkeit auf dem Schichtträger auch Löslichkeitseigenschaften eine Rolle. So sind beispielsweise Polyesterharze, wie Mischpolyester aus Iso- und Terephthalsäure mit Glykol, oder Silikonharze, wie dreidimensional vernetzte Phenyl-methylsiloxane, oder sogenannte Reaktivharze, wie sie unter der Bezeichnung DD-Lacke bekannt sind, geeignet. Auch Polycarbonatharze sind gut einsetzbar. Zur bevorzugten Verwendung des erfindungsgemäßen Aufzeichnungsmaterials zur Herstellung von Druckformen sind solche Bindemittel besonders geeignet, die in wäßrigen oder alkoholischen Lösungsmittelsystemen, gegebenenfalls unter Säure- oder Alkalizusatz, löslich sind. Geeignete Bindemittel sind hiernach hochmolekulare Substanzen, die alkalilöslich machende Gruppen tragen, wie Säureanhydrid-, Carboxyl-, Phenol-, Sulfosäure-, Sulfonamid- oder Sulfonimidgruppen. Mischpolymerisate mit Anhydridgruppen können mit besonders gutem Erfolg verwendet werden, da durch das Fehlen freier Säuregruppen die Dunkelleitfähigkeit der photoleitfähigen Schicht gering ist trotz guter Alkalilöslichkeit.

Die Schichtträger des Aufzeichnungsmaterials können flächig oder zylindrisch ausgebildet sein und in bekannter Weise aus einer Metallplatte, einer Metallfolie, aus metallisierten Papieren oder aus Papieren oder Folien, die mit einem elektrisch leitenden Kunststoff oder anderen leitenden anorganischen bzw. organischen Stoffen beschichtet sind, bestehen. Der Schichtträger wird vorzugsweise aus einer Metallunterlage oder einer metallisierten Folie gebildet.

Auf dem erfindungsgemäßen Aufzeichnungsmaterial können in bekannter Weise auf diesem selbst Tonerbilder erzeugt werden, es ist aber auch möglich, entweder das hergestellte Ladungsbild oder das Tonerbild auf ein Bildempfangsmaterial zu übertragen.

Das elektrophotographische Aufzeichnungsmaterial kann als übliche Zusätze in der photoleitfähigen Schicht Verlaufmittel und Weichmacher und/oder zwischen Schichtträger und photoleitfähiger Schicht Haftvermittler enthalten.

Nachstehende Beispiele sollen die Erfindung näher erläutern, jedoch nicht hierauf begrenzen.

### Beispiel 1

Eine Lösung von 15 g 2,5-Bis-(4'-diethylaminophenyl)-1,3,4-oxdiazol, 15 g eines Mischpolymerisates aus Styrol und Maleinsäureanhydrid, 139 g Tetrahydrofuran, 40 g Butylacetat, 91 g Methylglykol, 75 mg des Sensibilisierungsfarbstoffes Formel 1 der beigefügten Formelsammlung, wurde auf eine aluminiumbedampfte, 100 m dicke Polyesterfolie aufgebracht. Nach dem Verdunsten des Lösungsmittels resultierte

eine etwa 5 m dicke photoleitfähige Schicht mit einer spektralen Empfindlichkeit, die vom kurzwelligen roten Gebiet bis etwa 740 nm reichte und ein Sensibilisierungsmaximum bei 690 nm besaß.

Die Schicht wurde mit einer Corona auf etwa —450 V aufgeladen und in einer Reprokamera mit 8 Autophotlampen zu je 500 Watt 25 Sekunden lang belichtet. Als Vorlage diente die Montage einer gedruckten Schaltung auf einem Standbogen, der mit roten Markierungen und Orientierungslinien versehen war. Durch die Lichtempfindlichkeit der Photoleiterschicht in diesem Spektralbereich wurden die Markierungen auf der kopierten Folie nicht wiedergegeben.

Nach dem Entwickeln mit einem elektrophotographischen Flüssigentwickler und Entschichten der Photoleiterschicht an den Nichtbildstellen nach dem in der DE-PS 23 22 047 (entsprechend US-PS 4,066,453) beschriebenen Verfahren wurde die freigelegte aufgedampfte Aluminiumschicht durch Behandeln mit 2 n Natronlauge entfernt. Man erhielt auf diese Weise eine gedruckte Schaltung.

## Beispiel 2

Zu einer Lösung von 25 mg des Sensibilisierungsfarbstoffes nach Formel 4 in 90 g eines Lösungsmittelgemisches, bestehend aus 140 g Tetrahydrofuran, 40 g Butylacetat und 90 g Methylglykol, wurden 7,5 g eines Mischpolymerisates aus Styrol und Maleinsäureanhydrid (SCRIPSET® 540, Monsanto, USA) langsam unter Rühren bei Raumtemperatur eingetragen, 15 Minuten lang gerührt. Dann wurden 5 g des Photoleiters 2-Vinyl-4-(2′-chlorphenyl)-5-(4″-diethylaminophenyl)-oxazol zugegeben. Die Beschichtungslösung wurde anschließend auf einen oberflächlich gebürsteten Aluminiumträger aufgeschleudert zu einem Trockenschichtgewicht von etwa 5 g/m². Es wurde eine bis etwa 750 nm mit einem Maximum bei 690 nm selektiv sensibilisierten Schicht erhalten. Das Ganze wurde zu einer Druckform für den Offsetdruck wie folgt verarbeitet.

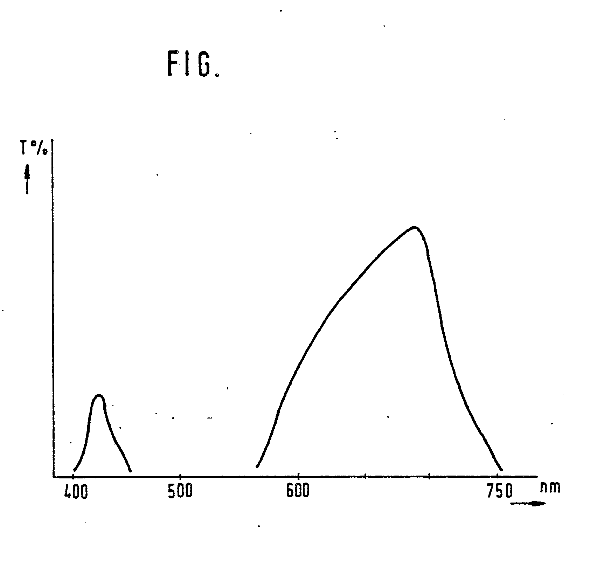

Die photoleitfähige Schicht wurde im Dunkeln mit Hilfe einer Corona auf —450 V aufgeladen. Die bildmäßige Belichtung erfolgte mit einer Reprokamera bei Blende 14 zehn Sekunden lang, wobei als Lichtquelle 10 MH-Strahler von je 600 Watt Leistung verwendet wurde. Das latente Ladungsbild wurde mit einem handelsüblichen Trockentoner mit Hilfe einer Magnetwalze entwickelt und das resultierrende Tonerbild wurde durch Wärme fixiert. Nach Entfernen der photoleitfähigen Schicht an den nicht mit Toner bedeckten Stellen mit einer Lösung aus 50 g $NaSiO_3 \cdot 9H_2O$ in 250 g Glycerin (86 %ig), verdünnt mit 390 g Ethylenglykol und 310 g Methanol wurde eine Flachdruckform erhalten, mit der in hoher Druckauflage gedruckt werden konnte. Das Material konnte bei grünem Dunkelkammerlicht verarbeitet werden und besaß eine Sensibilisierungscharakteristik, wie in der beigefügten Abbildung dargestellt.

Das Spektrogramm wurde erhalten durch Belichtung durch ein Interferenzfilter mit linearem stufenlosem Graukeil und nachfolgender Trockentoner-Entwicklung.

Bei Belichtung durch ein Filter (699 nm) mit einer Intensität von 5,1 $\mu W\ cm^{-2}$ und einer Energie von 280 $\mu J\ cm^{-2}$ entlädt sich die sensibilisierte Photoleiterschicht nach Aufladung auf —420 V nach 50 sec auf —50 V.

## Beispiel 3

Eine Lösung von 8 g 2-Phenyl-4-(2′-chlorphenyl)-5-(4″-diethylaminophenyl)-oxazol und 8 g eines Styrol-Maleinsäureanhydrid-Mischpolymerisates (Scripset 550, Monsanto, USA) in 180 g Tetrahydrofuran wurde mit 150 mg des in Methanol gelösten Sensibilisierungsfarbstoffes, Formel 1, versetzt.

Diese Lösung wurde auf ein elektrochemisch aufgerauhtes und anodisiertes Aluminiumblech aufgebracht, so daß nach dem Verdunsten des Lösungsmittels ein 6 g/m² starker Trockenfilm entstand.

Die erhaltene photoleitfähige Schicht wurde im Dunkeln mit einer Corona auf —722 V aufgeladen und anschließend mit einer Halogenlampe durch ein Interferenzfilter (Bandbreite 20 nm) bei 664 nm belichtet. Die Energie $E_{1/2}$, die erforderlich war, um die Schicht von der Dunkelaufladung auf die halbe Aufladungshöhe (—361 V) zu reduzieren, betrug 6,6 $\mu J\ cm^{-2}$.

## Formeln

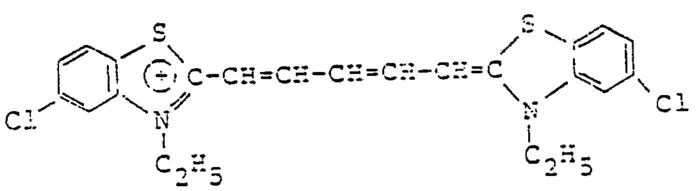

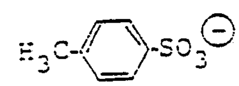

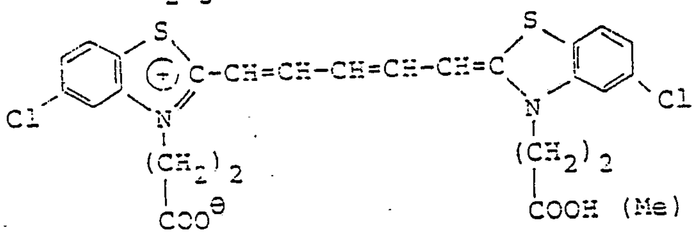

(Fortsetzung)

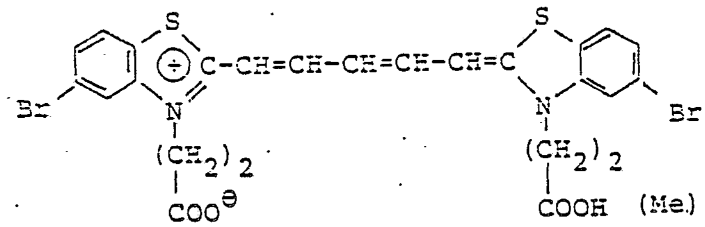

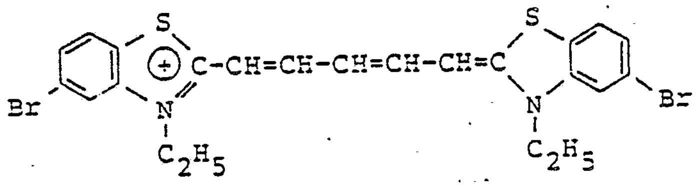

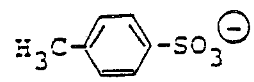

## Patentansprüche

1. Elektrophotographisches Aufzeichnungsmaterial, bestehend aus einem elektrisch leitenden Schichtträger und einer photoleitfähigen Schicht, enthaltend organischen Photoleiter, Cyaninfarbstoff als Sensibilisierungsfarbstoff, Bindemittel und übliche Zusätze, dadurch gekennzeichnet, daß es als Sensibilisator mindestens ein Bis-benzthiazol-pentamethincyanin der allgemeinen Formel enthält,

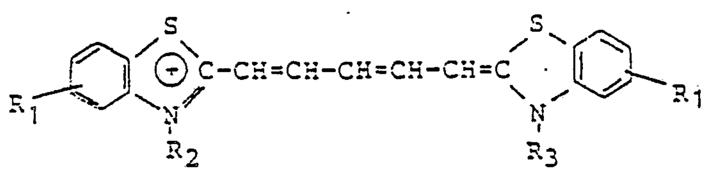
$X^{\ominus}$

in der

$R_1$ Halogen,

$R_2$ Alkyl mit 1 bis 3 Kohlenstoffatomen, $-(CH_2)_m-SO_3^-$ oder $-(CH_2)n-COO^-$,

$R_3$ Alkyl mit 1 bis 3 Kohlenstoffatomen, $(-CH_2)_mSO_3H$, $-(CH_2)_nCOOH$ oder deren Alkalisalz (Me),

X p-Toluolsulfonat, Bromid, Jodid, Perchlorat oder Null, wenn $R_2$ die angegebene Betainstruktur besitzt,

m 2 oder 3 und

n 1 oder 2

bedeuten, mit einem Sensibilisierungsmaximum im Bereich zwischen etwa 680 und 710 nm.

2. Aufzeichnungsmaterial nach Anspruch 1, dadurch gekennzeichnet, daß $R_1$ Chlor oder Brom bedeutet.

3. Aufzeichnungsmaterial nach Ansprüchen 1 und 2, dadurch gekennzeichnet, daß das Bis-benzthiazol-pentamethin-cyanin eine Verbindung der Formel

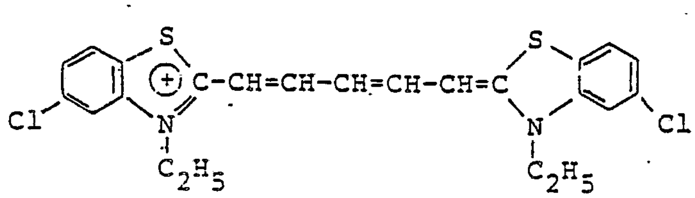

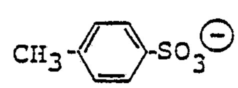

darstellt.

4. Aufzeichnungsmaterial nach Ansprüchen 1 bis 3, dadurch gekennzeichnet, daß die photoleitfähige Schicht zusätzlich einen Sensibilisierungsfarbstoff enthält, der ein Sensibilisierungsmaximum unterhalb 670 nm mit einem steilen Abfall der Empfindlichkeit an der kurzwelligen Kante besitzt.

5. Aufzeichnungsmaterial nach Anspruch 4, dadurch gekennzeichnet, daß der Sensibilisierungsfarbstoff Säuregrün (C.I. 42 095) ist.

6. Aufzeichnungsmaterial nach Anspruch 1, dadurch gekennzeichnet, daß der organische Photoleiter ein Oxazol-Oxdiazol-, Hydrazon- oder Pyrazolin-Derivat darstellt.

7. Aufzeichnungsmaterial nach Anspruch 6, dadurch gekennzeichnet, daß der Photoleiter 2,5-Bis-(4'-diethylaminophenyl)-oxdiazol-1,3,4 ist.

8. Aufzeichnungsmaterial nach Anspruch 6, dadurch gekennzeichnet, daß der Photoleiter 2-Vinyl-4-(2'-chlorphenyl)-5-(4''-diethyl-aminophenyl)-oxazol ist.

9. Aufzeichnungsmaterial nach Anspruch 6, dadurch gekennzeichnet, daß der Photoleiter 2-Phenyl-4-(2'-chlorphenyl)-5-(4''-diethylaminophenyl)-oxazol ist.

10. Aufzeichnungsmaterial nach Anspruch 1 zur Herstellung von Druckformen mit einer Metallunterlage oder metallisierten Folie als Schichtträger.

11. Aufzeichnungsmaterial nach Anspruch 10, dadurch gekennzeichnet, daß die photoleitfähige Schicht als Bindemittel ein Styrol-Maleinsäureanhydrid-Mischpolymerisat oder ein Phenolharz enthält.

**Claims**

1. Electrophotographic recording material which comprises an electrically conductive support and a photoconductive layer containing an organic photoconductor, a cyanine dye as a sensitizing dye, a binder, and customary additives, wherein the sensitizer comprises at least one bis-benzothiazole-pentamethine-cyanine of the general formula :

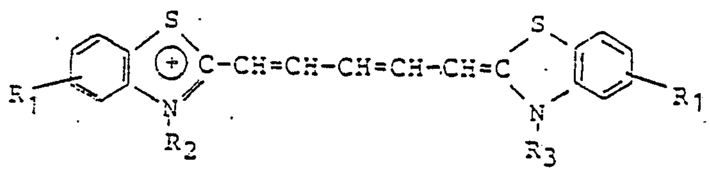

$X^{\ominus}$

wherein

$R_1$ denotes halogen,

$R_2$ denotes alkyl having from 1 to 3 carbon atoms, $-(CH_2)_m-SO_3^-$ or $-(CH_2)_n-COO^-$,

$R_3$ denotes alkyl having from 1 to 3 carbon atoms, $(-CH_2)_mSO_3H$, $-(CH_2)_nCOOH$ or the alkali metal salt thereof (Me),

X denotes p-toluene sulfonate, bromide, iodide, perchlorate or nothing, if $R_2$ has the indicated betaine structure,

m is 2 or 3, and

n is 1 or 2,

with a sensitization peak in the range between about 680 nm and 710 nm.

2. A recording material as claimed in claim 1, wherein $R_1$ denotes chlorine or bromine.

3. A recording material as claimed in claims 1 and 2, wherein the bis-benzothiazole-pentamethine-cyanine comprises a compound of the formula

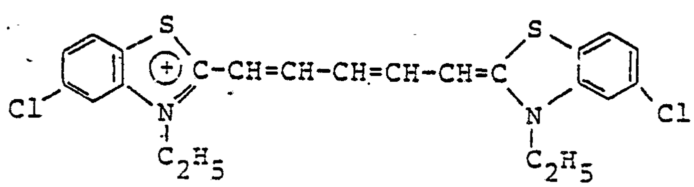

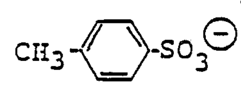

4. A recording material as claimed in claims 1 to 3, wherein the photoconductive layer additionally comprises a sensitizing dye which has a sensitization peak below 670 nm, with a steep drop of sensitivity at the short-wave edge.

5. A recording material as claimed in claim 4, wherein the sensitizing dye comprises Acid Green (C.I. 42 095).

6. A recording material as claimed in claim 1, wherein the organic photoconductor comprises an oxazole, oxdiazole, hydrazone or pyrazoline derivative.

7. A recording material as claimed in claim 6, wherein the photoconductor comprises 2,5-bis-(4'-diethylaminophenyl)-oxdiazole-1,3,4.

8. A recording material as claimed in claim 6, wherein the photoconductor comprises 2-vinyl-4-(2'-chlorophenyl)-5-(4''-diethylamniophenyl)-oxazole.

9. A recording material as claimed in claim 6, wherein the photoconductor comprises 2-phenyl-4-(2'-chlorophenyl)-5-(4''-diethylamniophenyl)-oxazole.

10. A recording material as claimed in claim 1 for the manufacture of printing forms having a metal base or a metallized plastic film as the support.

11. A recording material as claimed in claim 10, wherein the photoconductive layer comprises a styrene-maleic anhydride copolymer or a phenolic resin as the binder.

**Revendications**

1. Matériau de reproduction électrophotographique, constitué d'un support électroconducteur et d'une couche photoconductrice, contenant un photoconducteur organique, un colorant du type cyanine en tant que colorant de sensibilisation, un liant et des additifs usuels, caractérisé en ce qu'il contient en tant que sensibilisateur au moins un bis-benzothiazol-pentaméthine-cyanine de formule générale :

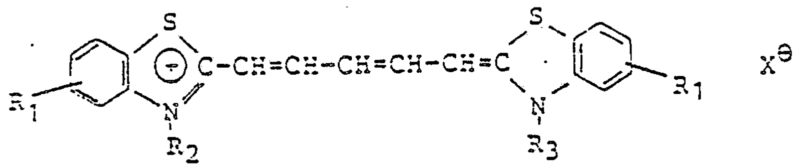

dans laquelle :

$R_1$ représente un halogène,

$R_2$ un alkyle ayant 1 à 3 atomes de carbone, $-(CH_2)_m-SO_3^-$ ou $-(CH_2)_n-COO^-$,

$R_3$ un alkyle ayant 1 à 3 atomes de carbone, $(-CH_2)_mSO_3H$, $-(CH_2)_nCOOH$ ou leur sel alcalin (Me),

X le p-toluènesulfonate, bromure, iodure, perchlorate ou rien, lorsque $R_2$ a la structure bétaïne donnée,

m est 2 ou 3, et

n est 1 ou 2,

avec un maximum de sensibilisation dans la plage d'environ 680 et 710 nm.

2. Matériau de reproduction selon la revendication 1, caractérisé en ce que $R_1$ représente le chlore ou le brome.

3. Matériau de reproduction selon les revendications 1 et 2, caractérisé en ce que la bis-benzothiazol-pentaméthine-cyanine est un composé représenté par la formule :

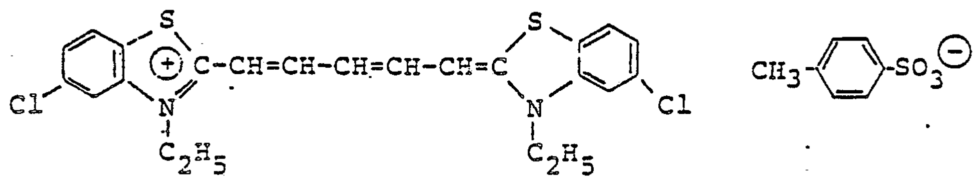

4. Matériau de reproduction selon les revendications 1 à 3, caractérisé en ce que la couche photoconductrice contient en plus un colorant de sensibilisation qui possède un maximum de sensibilisation en dessous de 670 nm avec une chute brutale de la sensibilité du côté ondes courtes.

5. Matériau de reproduction selon la revendication 4, caractérisé en ce que le colorant de sensibilisation est le vert acide (C.I. 42 095).

6. Matériau de reproduction selon la revendication 1, caractérisé en ce que le photoconducteur organique et un dérivé d'oxazole, d'oxadiazole, de hydrazone ou de pyrazoline.

7. Matériau de reproduction selon la revendication 6, caractérisé en ce que le photoconducteur est le 2,5-bis-(4'-diéthylaminophényl)-oxadiazole-1,3,4.

8. Matériau de reproduction selon la revendication 6, caractérisé en ce que le photoconducteur est le 2-vinyl-4-(2'-chlorophényl)-5-(4"-diéthyl-aminophényl)-oxazole.

9. Matériau de reproduction selon la revendication 6, caractérisé en ce que le photoconducteur est le 2-phényl-4-(2'-chlorophényl)-5-(4"-diéthylaminophényl)-oxazole.

10. Matériau de reproduction selon la revendication 1, pour la fabrication de formes d'impression avec une couche inférieure métallique ou de feuille métallisée en tant que support.

11. Matériau de reproduction selon la revendication 10, caractérisé en ce que la couche photoconductrice contient en tant que liant un copolymérisat de styrène-anhydride maléique ou une résine phénolique.

FIG.